Europäisches Patentamt

European Patent Office

Office européen des brevets

(11) Publication number: **0 089 746 B1**

# EUROPEAN PATENT SPECIFICATION

(45) Date of publication of patent specification: **11.11.92**    (51) Int. Cl.⁵: **B32B 27/00**, B29D 9/00, B29D 23/20, B29D 7/01

(21) Application number: **83300832.9**

(22) Date of filing: **18.02.83**

(54) **High gloss, low friction plastics sheet, method of production thereof, and container made from the sheet.**

(30) Priority: **22.03.82 US 360388**

(43) Date of publication of application:
**28.09.83 Bulletin 83/39**

(45) Publication of the grant of the patent:
**11.11.92 Bulletin 92/46**

(84) Designated Contracting States:
**AT BE CH DE FR GB IT LI LU NL SE**

(56) References cited:
**BE-A- 636 349**
**GB-A- 909 326**
**GB-A- 1 012 530**
**US-A- 3 300 286**
**US-A- 3 540 959**

(73) Proprietor: **AMERICAN NATIONAL CAN COM-PANY**
**8770 West Bryn Mawr Avenue**
**Chicago, Illinois 60631(US)**

(72) Inventor: **O'Sullivan, Eileen F.**
**20 Rundel Park**
**Rochester New York 14607(US)**

(74) Representative: **Jacquet, Michel et al**
**PECHINEY 28, rue de Bonnel**
**F-69433 Lyon Cédex 03(FR)**

## Description

The present invention relates to high gloss, low friction plastics sheet, method of production thereof, and container made from the sheet.

The field of this invention is plastics extrusion and lamination processes for producing products from extruded plastics.

Multiple layer products composed of laminates of plastics and other materials find common application in a variety of packages and containers. One example is a toothpaste tube, or similar tube for handling other fluent materials, in which the walls of the tube are usually composed of layers of plastics material, metal foil, and sometimes paper. The several components of the laminated wall contribute a combination of properties to the container which may not be possible to obtain in a single layer wall. Typically the wall from which the tube is formed will provide a gas and moisture barrier, will be resistant to the chemicals inside the tube, will be heat sealable on the inner and outer layers to allow heat sealed joints to be formed, and will provide an outermost layer protecting printing and decoration on the tube.

The outer layer of a tube package is particularly critical since, in addition to protecting the printing and other layers beneath, it should have a high gloss for aesthetic appeal. The attractiveness of the complete package is particularly dependent upon the gloss of the surface of the outer layer, and, in addition, the glossiness of the outer surface affects the visual impression transmitted from the printing below the outer layer. Distortion and "fuzzing" of the printing can occur if the outer surface is dull or has a matte finish because of the random refraction of light transmitted through the outer protective layer. It has been found, however, that extremely glossy or smooth surfaced outer layers also have a very high coefficient of friction which can lead to stacking and handling problems when the tubes are in contact with one another. The high friction of the outer surface also creates a problem when the flat wall stock is drawn through a forming die to form the tubes, since the outer surface will be in dragging contact with the die.

To minimize the coefficient friction of a plastic surface, it is known to use a roughened or matte surfaced chill roll which impresses the extruded layer of plastic with a multitude of depressions and projections. See for example, US-PS 3,540,959. While such a matte finish can be used on the inside surface of a tube container, it is not satisfactory for the outside surface where gloss and clarity are important. High gloss is an especially important characteristic for the outer layer of a tube product because the curvature of the tube renders a dull surface finish more readily apparent to an observer.

The invention commences from US-A-3,300,286 which discloses a method of producing a plastics sheet having a surface with both high gloss and low coefficient of friction characteristics, wherein a thermoplastic material is extruded to form a heated thermoplastic layer and the said layer is pressed, while still in a softened state, with a chill roll which is maintained at a temperature at which it will cool and harden the surface of the layer contacted thereby, the chill roll having a grit-blasted, polished surface which has minute irregularly shaped depressions distributed thereover. According to this U.S. patent, the sheet attains a lustre which is a compromise between that obtained by mirror finish and matte finish rolls.

Among the aims of this invention is the provision of a plastics sheet having a surface which exhibits a higher gloss than has been attained in practice by following the teaching of US-A-3,300,286, and which possesses a surface configuration achieving a coefficient of friction of the surface that is only slightly worse than that achievable by following the teaching of US-A-3,300,286.

In deriving the present invention, we acquired a polished roll made according to US-A-3,300,286 from the proprietors of that patent, and achieved significantly improved results in terms of gloss by polishing it greatly to alter the characteristics of the depressions in its surface.

Starting from US-A-3,300,286 therefore, the present invention is a method of producing a plastics sheet having a surface with both high gloss and low coefficient of friction characteristics, wherein a thermoplastic material is extruded to form a heated thermoplastic layer and the said layer is pressed, while still in a softened state, with a chill roll which is maintained at a temperature at which it will cool and harden the surface of the layer contacted thereby, the chill roll having a grit-blasted, polished surface which has minute irregularly shaped depressions distributed thereover, the depressions having depths of 1 to 30 microns, an average depth of 12 microns with a standard deviation of the depth of 6.25 microns and the frequency of the depressions over the surface of the roll being in excess of 3,000 per square centimeter, characterised in that the grit-blasted and polished surface has been polished down to such an extent that the randomly-distributed irregularly shaped depressions are substantially convex and rounded about the peripheries thereof on said surface, and their average depths are reduced to about 5 microns with a standard deviation of the depth of less than 3 microns, there being an average frequency of depressions over the surface of the roll of approximately 3,000 per square centimeter, and the average area of each depression being less than 16,000 square microns.

Likewise, the present invention provides a plastics sheet having a surface of high gloss and low coefficient of friction, the surface being comprised of a layer of thermoplastic material with a smooth surface interrupted by randomly-distributed prominences, characterised in that the prominences have an average height of about 5 microns with a standard deviation of the height of the prominences about the average of less than 3 microns, an average frequency of the prominences over the surface of the sheet of approximately 3,000 per square centimeter and an average area of each prominence of less than 16,000 square microns, the prominences having irregular shapes with substantially convex and rounded peripheries on the said surface such as are obtainable by subjecting the thermoplastic layer to the method defined in the last paragraph.

Further, the present invention provides a container having a layer as or near the outermost layer comprising a thermoplastics material having a smooth surface interrupted by randomly distributed prominences characterised as set forth in the last preceding paragraph.

Also, according to the present invention, there is provided a chill roll for use in practising the method of this invention, which roll is grit-blasted forming randomly-distributed irregularly shaped depressions in the surface thereof and chromium plated, the surface of the roll having depressions whose depths range from 1 to 30 microns, an average depth of 12 microns with a standard deviation of the depth of 6.25 microns and the frequency of the depressions over the surface of the roll being in excess of 3,000 per square centimeter, characterised in that the plated surface is polished to such an extent that the peripheries on the said surface of the irregularly shaped depressions therein are rendered substantially convex and rounded and the average area thereof is reduced to about 5 microns with a standard deviation of the depth of less than 3 microns, the average frequency of depressions over the roll surface being approximately 3,000 per square centimeter; and the average area of each depression being less than 16,000 square microns.

The roll which we acquired from the proprietors of US-A-3,300,286 and which we used to develop this invention, had irregular, jagged depressions preferably 7.62 to 15.24 microns deep. On inspection, we found the average depth of the depressions was 12 microns with a standard deviation of about 6.25 microns.

GB-A-1,012,530 and equivalent BE-A-63649 disclose a chill roll for processing plastics. The roll is chromium plated and polished, and thereafter subjected to a final treatment involving blasting with water bearing glass beads to pit the polished surface, forming regular generally hemispheroidal depressions therein.

When practising the present invention, a surface of an extruded layer of plastics material is passed into contact with a chill roll which conditions and hardens the surface of the plastic layer. The resulting surface has a high gloss, which can average 60 to 70 units on the Gardner gloss standard at an angle of 20°, and can exhibit a face-to-face coefficient of friction of between 0.1 and 1.0 on a Kayeness friction tester. There is relatively little scattering of the light transmitted through or reflected from the surface of the layer. The surface of the plastics layer treated by the chill roll is found to be a smooth surface interrupted by randomly distributed microscopic prominences with an average height varying from 2 to 10 microns. The convex, rounded and smooth prominences differ from the prominences produced by conventional pocket chill rolls, for the latter prominences are generally irregular and jagged about their peripheries.

The thermoplastic layer having a surface conditioned as described above is preferably coated on to a base layer, which itself may be a laminate of several materials, to make a layered structure suitable to form a wall of a tube container. The entire laminated structure may then be shaped in a die into a tubular form with overlapping edges to be heat sealed together, the conditioned surface layer forming the outermost layer of the tube and covering any printing or decoration on the base layer to which it is coated.

The chill roll is a hard surfaced roll which is first blasted with a fine grit to form minute surface depressions, of random distribution and varying depth, and is then chromium plated. The roll so formed is then highly polished to remove a substantial portion of the chromium surface of the roll until the depressions within the roll have an average depth of about 5 microns, (within a range of about 2 to 10 microns) and a standard deviation of less than about 3 microns, and having an average area of less than 16,000 square microns.

The resulting plastics product, whether it be a single layer or a multi-layer laminate, has a surface which is both high in gloss and substantially lower in coefficient of friction than is commonly observed with present high gloss tube packages.

The invention will be described now in more detail by way of non-limitative example, with reference to the accompanying drawings and micrographs, in which:

Fig. 1 is a schematic side view of extrusion and laminating apparatus used in carrying out the method according to the invention,

Fig. 2 is a simplified perspective view of the shaping operation showing the step of forming a continuous tube from a web of laminate produced in accordance with the invention,

Fig. 3 is a photomicrograph of the surface of a prior art chill roll,

Fig. 4 is a photomicrograph of the surface of a sheet produced with the chill roll of Fig. 3,

Fig. 5 is a photomicrograph, at a higher magnification, of the surface of the sheet produced with the chill roll of Fig. 3,

Fig. 6 is a photomicrograph of the surface of a chill roll for use in performing the method of the present invention,

Fig. 7 is a photomicrograph of the surface of a sheet produced according to this invention with the chill roll of Fig. 6, and

Fig. 8 is a photomicrograph of the sheet as in Fig. 7 at a higher magnification.

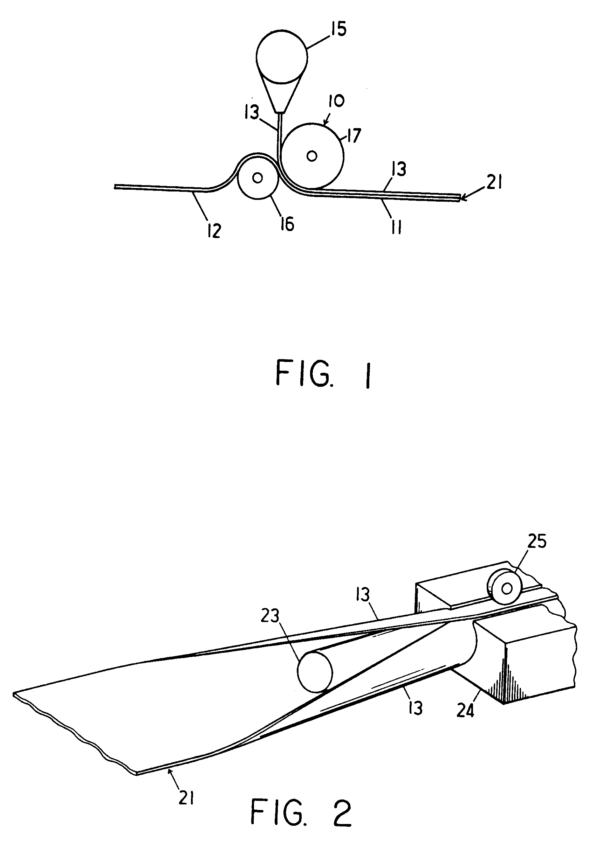

Fig. 1 shows a simplified side view of apparatus 10 for forming an extruded plastic sheet and for laminating sheets together. The finished laminated product is shown for illustration as having an inner surface 11 on a preformed continuous sheet or web 12, and an outer layer of thermoplastic 13. The preformed base layer 12 is typically a composite of a barrier layer formed of a material such as metal foil which is impervious to gas and moisture, with a surface layer of plastic such as polyethylene. Such a structure is illustrative only, since common wall structures for packages such as toothpaste tubes usually have more than three layers, including layers of paper and special plastics. It is also common for the outer surface of the layer 12 to have printing and decoration thereon which is covered and protected by the outermost layer 13. The present invention resides primarily in the manner of forming and surface conditioning the outermost layer 13; the base layer or laminate on which the layer 13 is laid, illustratively shown as the single layer 12, may be formed and laminated in any desired manner.

The material forming the outer layer 13 may be any of the common thermoplastics which are tough and relatively transparent, such as polyethylene, polyvinyl chloride, polyvinylidine chloride, and polypropylene. The thermoplastic material is heated to a fluid state and is extruded as a single layer film from an extruder 15. The heated film, while still soft, is pressed and bonded to the surface of the composite layer 12 in a nip formed between a backup roller 16 and a chill roller 17. The finished laminate 21, comprised of the layers 12 and 13, may then be cut, as desired, and rolled into a tube by being formed over a mandrel 23 and drawn through a forming die 24 as illustrated in Fig. 2. The overlapped longitudinal edges of the laminate 21 are heat sealed together by a heated pressure roller 25, as further described in US-PS 3,540,959, or by other conventional means, such as shown in US-PS 3,388,017. In the forming of the laminate 21 into a tube, the layer 13 forms the outermost layer, which is visible to the consumer.

The roller 17 which contacts what will become the outersurface of the layer 13 is typically maintained at a constant temperature while it is rotating by circulating water or another liquid through its interior. As the surface of the roller 17 contacts the hot plastic exiting from the extruder 15, the plastic drops in temperature and substantially hardens. The surface characteristics of the chill roller will thus be permanently impressed upon the surface of the plastic. To achieve the high gloss desired on the outside surface of container tubes such as those used to carry toothpaste, it has been common to use a highly polished (commonly called a mirror finish), chrome plated chill roller. Tubes formed from plastic treated with such a chill roller typically have a gloss level between 60 and 80 units (as measured with a Hunter gloss meter, at TAPPI 20° angle) and a coefficient of friction of 6 to 8 units (as measured face-to-face on a Kayeness friction tester). The gloss and clarity of the surface obtained with such a chill roller is satasifactory, but the high level of friction presents difficulties in forming the tubes and also in handling the tubes during packing and shipping.

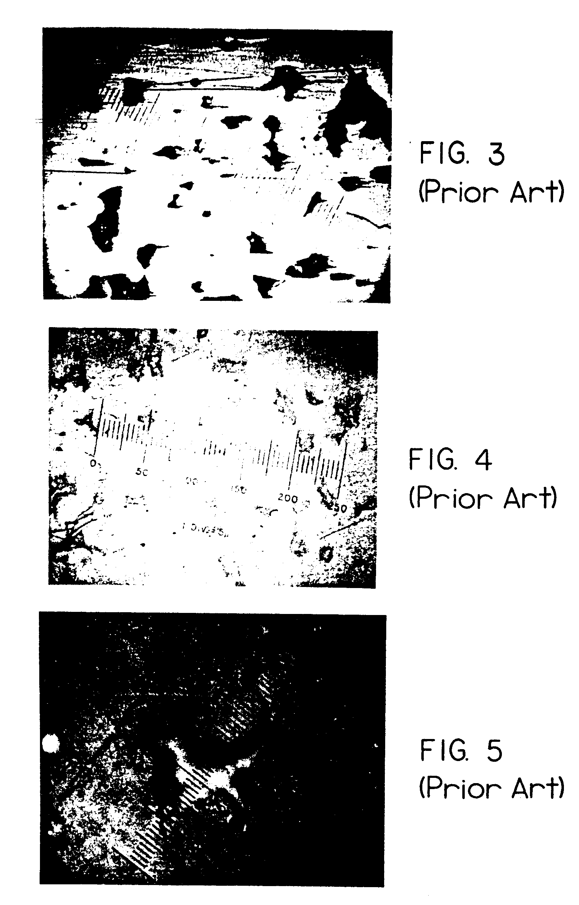

One approach to the problem of producing extruded plastic sheets having satisfactory gloss and friction characteristics is to use a polished chill roll which has minute surface depressions. An example of such a commercial roller, manufactured by Mirror Polishing & Plating Company, is shown in the photomicrograph of Fig. 3 at a magnification of 50X. The production of this type of roller is generally described in US-PS 3,300,286. The depth of the depressions may be measured by successively focusing a microscope at the top and bottom of individual depressions and correlating the change in focus with depth. By making measurements in this manner, the depressions in the roll of Fig. 3 were found to have an average depth of 12 microns and a depth standard deviation of about 6.25 microns, varying from a minimum depth of 1 to 2 microns to a maximum depth of greater than 30 microns. The surface of a multiple layer sheet having a surface layer 13 formed of low density polyethylene using the roll of Fig. 3 as the chill roller is shown in Figs. 4 and 5. The photomicrograph of Fig.4 is at a magnification of 50X, and the photomicrograph of Fig. 5 is at a magnification of 200X. It is noted from an examination of Figs. 4 and 5 that the prominences formed on the web - corresponding to the depressions in the chill roll - are jagged and irregular about their peripheries. The source of the irregular peripheries of the prominences is revealed from an examination of Fig. 3, since the depressions in the roll have jagged peripheries. The polyethylene surface was found to have a satisfactory face-to-face coefficient of friction, in the range of 0.3 to 0.5, but the measured gloss was in the range of 25 to 40 (Gardner gloss guard, 45° angle) compared to a gloss measurement of about 50 (Gardner gloss guard, 45° angle) for standard polyethylene films produced with a smooth chill roller. When such a chill roller is used to produce the outer layer of a laminate in which such transparent outer layer covers printing, a slight reduction of the clarity of the printed matter is observed. The many jagged protrusions observed about the peripheries of the prominences on the plastic sheets of Figs. 4 and 5 may tend to diffuse or scatter light from the surface, thus reducing gloss.

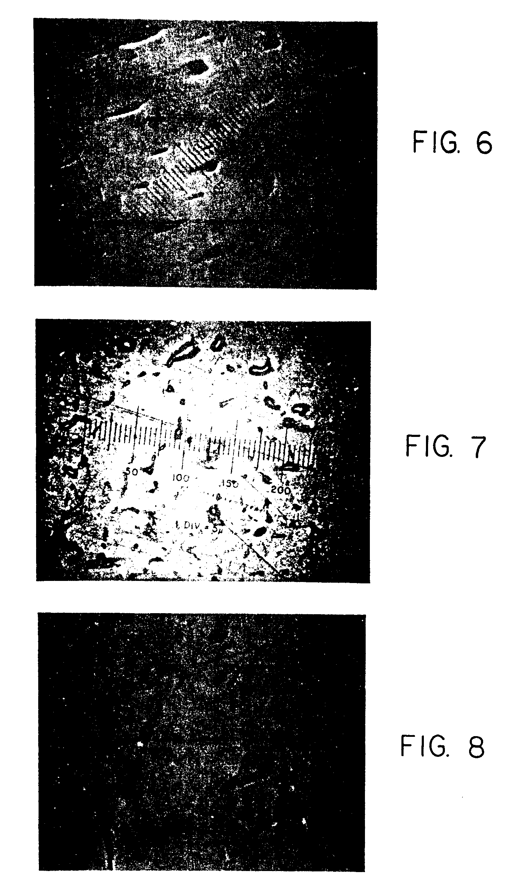

A photomicrograph at a magnification of 50X of the surface of a chill roller used to produce plastic film in accordance with the present invention is shown in Fig. 6. The roller of Fig. 6 is produced by polishing down a substantial portion of the chromium plated surface of a standard roller such as shown in Fig. 3 such that the average depth of the depressions and their average area is greatly reduced. It is found that the jagged, irregular peripheries characteristic of the depressions in the chill roll of Fig. 3 are substantially eliminated by such extreme polishing. The roller of Fig. 6 has randomly distributed depressions with an average depth of about 5 microns, a standard deviation of the depth of the depressions of less than 3 microns, and an average area less than 16,000 square microns. The chill roller of Fig. 6 may be formed by polishing the surface of a roller such as that shown in Fig. 3 to reduce the average depth of the depressions in the surface to one half or less of the depth of the depressions before polishing. The average frequency of depressions over the surface of the roller is approximately 3000 per square centimeter. As seen in Fig. 6, the depressions are substantially convex in shape and substantially free of the irregularities about the perimeter of the depressions that are observed in Fig. 3.

Photomicrographs of a polyethylene sheet formed using the chill roller of Fig. 6 as the roller 17 are shown in Fig. 7 (50X) and Fig. 8 (150X). It is readily seen that the prominences formed on the surface of the sheet are substantially convex and are regular around their peripheries with relatively few jutting, jagged portions extending away from the prominences. A multilayer sheet having a low density polyethylene outer layer 13 formed in such a manner was found to have a coefficient of friction, as tested face-to-face on a Kayeness Friction Tester, in the range of 0.1 to 1.0, over a selection of several samples formed in accordance with the invention. The gloss was found to be in the range of 60 to 70 units, at a TAPPI 20° angle. The

heights of the prominences, which correspond to the depths of the depressions on the chill roll, lie almost entirely in the range of 2 to 10 microns, with a standard deviation of less than 3 microns (generally ranging from 2 to 3 microns), about the average prominence height of 5 microns. The area occupied by individual prominences averages less than 16,000 square microns.

A multilayer laminate suitable for use as a tube container wall was produced in accordance with the process shown in Fig. 1. The layer 13 was formed of a coextrusion of low density polyethylene resins and was adhered to a white pigmented polyethylene layer having ink printing on its top surface. The layer 13 was transparent and had a caliper of approximately 1.5 mils (38.1 microns). The outer surface of the laminate had a face-to-face coefficient of friction of less than 1.0 and a gloss at a TAPPI 20° angle of approximately 60. The printing covered by the layer appeared clear and sharply defined.

## Claims

1. A method of producing a plastics sheet having a surface with both high gloss and low coefficient of friction characteristics, wherein a thermoplastic material is extruded to form a heated thermoplastic layer and the said layer is pressed, while still in a softened state, with a chill roll which is maintained at a temperature at which it will cool and harden the surface of the layer contacted thereby, the chill roll having a grit-blasted, polished surface which has minute irregularly shaped depressions distributed thereover, the depressions having depths of 1 to 30 microns, an average depth of 12 microns with a standard deviation of the depth or 6.25 microns and the frequency of the depressions over the surface of the roll being in excess of 3,500 per square centimeter, characterised in that the grit-blasted and polished surface has been polished down to such an extent than the randomly-distributed irregularly shaped depressions are substantially convex and rounded about the peripheries thereof on said surface and their average depths are reduced to about 5 microns with a standard deviation of the depth of less than 3 microns, there being an average frequency of depressions over the surface of the roll of approximately 3,000 per square centimeter and the average area of each depression being less than 16,000 square microns.

2. The method according to claim 1, further characterised by the additional steps of forming a base layer of at least one selected material, and placing the surface of the thermoplastic layer opposite to that which contacts the chill roller in contact with the base layer and applying pressure to all or the layers to form a laminate.

3. The method according to claim 2, further characterised by shaping the laminate (21) between a forming mandrel (23) and forming die (24) by moving the laminate longitudinally and folding it into a tubular shape about the mandrel with the said thermoplastic layer (13) on the outside of the tubular shape in sliding contact with the die and with the longitudinal edges of the laminate overlapped, and heat sealing the overlapped longitudinal edges of the laminate together to form a closed, sideseamed tube.

4. A method of producing a plastics sheet having a surface with both high gloss and low coefficient of friction characteristics, wherein a thermoplastic material is extruded to form a heated thermoplastic layer and the said layer is pressed, while still in a softened state, with a chill roll which is maintained at a temperature at which it will cool and harden the surface of the layer contacted thereby, the chill roll having a grit-blasted, polished surface which has minute irregularly shaped depressions distributed thereover, characterised in that for providing prominences in the plastics sheet having irregular shapes with substantlally convex rounded peripheries, the depressions are substantially convex and rounded about the peripheries thereof on the surface of the roll, and their average depths are about 5 microns with a standard deviation of the depth of less than 3 microns, there being an average frequency of depressions over the surface of the roll of approximately 3,000 per square centimeter and the average area of each depression being less than 16,000 square microns.

5. A chill roll for use in practising the method of claim 1, 2, 3 or 4, which roll is grit-blasted forming randomly-distributed, irregularly shaped depressions in the surface thereof and chromium plated, the surface of the roll having depressions whose depths range from 1 to 30 microns, an average depth of 12 microns and a standard deviation of the depth of 6.25 microns and the frequency of the depressions over the surface of the roll being in excess of 3,000 per square centimeter, characterised in that the plated surface is polished to such an extent that the peripheries on the said surface of the irregularly shaped depressions are rendered substantially convex and rounded and the average area thereof is reduced to about 5 microns with a standard deviation of the depth of less than 3 microns, the average frequency of depressions over the roll surface being approximately 3,000 per square centimeter, and the average area of each depression being less than 16,000 square microns.

6. A plastics sheet having a surface of high gloss and low coefficient of friction, the surface being comprised of a layer of thermoplastic material with a smooth surface interrupted by randomly-distributed prominences, characterised in that the prominences have an average height of about 5 microns with a standard deviation of the height of the prominences about the average of less than 3 microns, an average frequency of the prominences over the surface of the sheet of approximately 3,000 per square centimeter and an average area of each prominences of less than 16,000 square microns, the prominences having irregular shapes with substantially convex and rounded peripheries on the said surface such as are obtainable by subjecting a thermoplastic layer to the method according to any of claims 1 to 4.

7. The plastic sheet according to claim 6, characterised in that the thermoplastic material is polyethylene and that the surface of the sheet has a face-to-face coefficient of friction of 1.0 or less and has a gloss, TAPPI 20° angle from 60 to 70 units.

8. The plastics sheet according to claim 6 or claim 7, characterised in that the thermoplastic surface is the outer overcoat surface of a printed and/or decorated substrate, the thermoplastic surface being transparent.

9. A container having a layer as or near the outermost layer comprising a thermoplastics material having a smooth surface interrupted by randomly-distributed prominences, characterised in that the prominences have an average height of about 5 microns with a standard deviation of the height of the prominences about the average of less than 3 microns, an average frequency of the prominences over the surface of approximately 3,000 per square centimeter and the average area of each depression being less than 16,000 square microns, the prominences having irregular shapes with substantially convex and rounded peripheries on the said surface, such as are obtainable by subjecting a thermoplastics layer to the method according to any of claims 1 to 4.

10. A container according to claim 9, wherein the plastics material is polyethylene and wherein the surface thereof has a face-to-face coefficient of friction of 1.0 or less and has a gloss, TAPPI 20° angle, from 60 to 70 units.

11. A container according to claim 9 or claim 10, which is of tubular form wherein the said layer is a transparent overcoat on a printed and/or decorated substrate.

**Patentansprüche**

1. Verfahren zur Herstellung einer Kunststoffolie, deren Oberfläche sowohl hochglänzend ist als auch eine geringe Reibungszahl besitzt, wobei ein thermoplastisches Material zur Bildung einer erwärmten thermoplastischen Schicht extrudiert und diese Schicht noch im erweichten Zustand mit einer Kühlwalze gepreßt wird, die bei einer Temperatur gehalten wird, bei der diese die Oberfläche der mit ihr so in Kontakt stehenden Schicht kühlt und härtet, wobei die Kühlwalze eine sandgestrahlte, polierte Oberfläche mit über sie verteilten winzigen unregelmäßig geformten Vertiefungen besitzt, wobei die Vertiefungen Tiefen von 1-30 $\mu$m, eine mittlere Tiefe von 12 $\mu$m mit einer Standardabweichung der Tiefe von 6,25 $\mu$m besitzen und die Häufigkeit der Vertiefungen auf der Oberfläche der Walze mehr als 3000/cm$^2$ beträgt, dadurch gekennzeichnet, daß die sandgestrahlte und polierte Oberfläche in einem solchen Ausmaß poliert ist, daß die zufällig verteilten unregelmäßig geformten Vertiefungen im wesentlichen konvex und an ihren Rändern an der Oberfläche abgerundet sind und ihre mittleren Tiefen auf ungefähr 5 $\mu$m mit einer Standardabweichung der Tiefe von weniger als 3 $\mu$m erniedrigt sind, wobei eine mittlere Häufigkeit der Vertiefungen auf der Oberfläche der Walze von ungefähr 3000/cm$^2$ vorliegt und die mittlere Ausdehnung jeder Vertiefung weniger als 16 000 $\mu$m$^2$ beträgt.

2. Verfahren nach Anspruch 1, weiter gekennzeichnet durch die zusätzlichen Schritte der Bildung einer Basisschicht aus mindestens einem ausgewählten Material und des Inkontaktbringens der Oberfläche der thermoplastischen Schicht, die der, die die Kühlwalze kontaktiert, gegenüberliegt mit der Basisschicht und des Anwendens von Druck auf alle Schichten zur Bildung eines Laminats.

3. Verfahren nach Anspruch 2, weiter gekennzeichnet durch Formen des Laminats (21) zwischen einer Dornstange (23) und einem Formwerkzeug (24) durch Längsbewegen des Laminats und Auffalten des Laminats in eine Röhrenform um den Dorn, wobei die thermoplastische Schicht (13) außerhalb der röhrenförmigen Form in gleitendem Kontakt mit dem Formwerkzeug steht und sich die Längskanten des Laminats überlappen, und Heißverschweißen der überlappenden Längskanten des Laminats zur Bildung eines geschlossenen, seitenverschweißten Rohres.

4. Verfahren zur Herstellung einer Kunststoffolie mit einer Oberfläche, die sowohl hochglänzend ist als auch eine geringe Reibungszahl aufweist, wobei ein thermoplastisches Material zur Bildung einer erwärmten thermoplastischen Schicht extrudiert und die Schicht noch im erweichten Zustand mit einer Kühlwalze gepreßt wird, die bei einer Temperatur gehalten wird, bei der diese die so kontaktierte Oberfläche kühlt und härtet, wobei die Kühlwalze eine sandgestrahlte polierte Oberfläche besitzt, die winzige, unregelmäßig geformte, über die Oberfläche verteilte Vertiefungen aufweist, dadurch gekennzeichnet, daß zum Erzeugen von Ausbuchtungen mit unregelmäßigen Formen und im wesentlichen konvexen abgerundeten Rändern in der Kunststoffolie die Vertiefungen im wesentlichen konvex und an ihren Rändern abgerundet sind, wobei ihre mittleren Tiefen ungefähr 5 $\mu$m mit einer Standardabweichung der Tiefe von weniger als 3 $\mu$m betragen und wobei die Vertiefungen auf der Oberfläche der Walze in einer mittleren Häufigkeit von ungefähr 3000/cm$^2$ auftreten und die mittlere Ausdehnung jeder Vertiefung weniger als 16 000 $\mu$m$^2$ beträgt.

5. Kühlwalze zur Verwendung bei der Durchführung des Verfahrens des Anspruchs 1, 2, 3 oder 4, welche Walze unter Bildung von zufällig verteilten unregelmäßig geformten Vertiefungen in ihrer Oberfläche sandgestrahlt und chrombeschichtet ist, wobei die Oberfläche der Walze Vertiefungen aufweist, die Tiefen von 1-30 $\mu$m, eine mittlere Tiefe von 12 $\mu$m und eine Standardabweichung der Tiefe von 6,25 $\mu$m aufweisen, und wobei die Vertiefungen auf der Oberfläche der Walze in einer Häufigkeit von mehr als 3000/cm$^2$ auftreten, dadurch gekennzeichnet, daß die beschichtete Oberfläche in einem solchen Ausmaß poliert ist, daß die Ränder der unregelmäßig geformten Vertiefungen auf der Oberfläche im wesentlichen konvex und abgerundet sind und ihre mittlere Ausdehnung auf ungefähr 5 μm mit einer Standardabweichung der Tiefe von weniger als 3 μm reduziert ist, wobei die Vertiefungen auf der Walzenoberfläche in einer Häufigkeit von ungefähr 3000/cm² auftreten und die mittlere Ausdehnung jeder Vertiefung weniger als 16 000 μm² beträgt.

6. Kunststoffolie mit einer Oberfläche, die sowohl hochglänzend ist als auch eine niedrige Reibungszahl aufweist, wobei die Oberfläche aus einer Schicht eines thermoplastischen Materials mit einer glatten Oberfläche besteht, die durch zufällig verteilte Ausbuchungen unterbrochen ist,
dadurch gekennzeichnet,
daß die Ausbuchtungen eine mittlere Höhe von ungefähr 5 μm mit einer Standardabweichung der Höhe der Ausbuchtungen von im Durchschnitt weniger als 3 μm besitzen, die Ausbuchtungen auf der Oberfläche der Folie in einer Häufigkeit von ungefähr 3000/cm² auftreten und die mittlere Ausdehnung jeder Ausbuchtung weniger als 16 000 μm² beträgt, wobei die Ausbuchtungen unregelmäßige Formen mit im wesentlichen konvexen und an der Oberfläche abgerundeten Rändern besitzen, wie sie erhalten werden, indem eine thermoplastische Schicht mit dem Verfahren nach einem der Ansprüche 1-4 behandelt wird.

7. Kunststoffolie nach Anspruch 6, dadurch gekennzeichnet, daß das thermoplastische Material Polyethylen ist und daß die Oberfläche der Folie eine Oberfläche/Oberfläche-Reibungszahl von 1,0 oder weniger und einen Glanz von TAPPI 20°-Winkel von 60-70 Einheiten besitzt.

8. Kunststoffolie nach Anspruch 6 oder 7, dadurch gekennzeichnet, daß die thermoplastische Oberfläche die Oberfläche der äußeren Schicht eines bedruckten und/oder dekorierten Substrats ist, wobei die thermoplastische Oberfläche transparent ist.

9. Behälter mit einer Schicht als oder nahe der äußersten Schicht, die ein thermoplastisches Material mit einer glatten Oberfläche aufweist, die zufällig verteilte Ausbuchtungen aufweist,
dadurch gekennzeichnet,
daß die Ausbuchtungen eine mittlere Höhe von ungefähr 5 μm mit einer Standardabweichung der Höhe der Ausbuchtungen von im Durchschnitt weniger als 3 μm besitzen, die Ausbuchtungen auf der Oberfläche in einer Durchschnittshäufigkeit von ungefähr 3000/cm² auftreten und die mittlere Ausdehnung jeder Vertiefung weniger als 16 000 μm² beträgt, wobei die Ausbuchtungen unregelmäßige Formen mit im wesentlichen konvexen und an der Oberfläche abgerundeten Rändern besitzen, wie sie durch Anwenden des Verfahrens nach einem der Ansprüche 1-4 auf eine thermoplastische Schicht erhalten werden.

10. Behälter nach Anspruch 9, worin das Kunststoffmaterial Polyethylen ist und worin seine Oberfläche eine Oberfläche/Oberfläche-Reibungszahl von 1,0 oder weniger und Hochglanz nach TAPPI 20°-Winkel von 60-70 Einheiten aufweisen.

11. Behälter nach Anspruch 9 oder 10 von röhrenartiger Form, worin die Schicht eine transparente Außenschicht auf einem gedruckten und/oder dekorierten Substrat ist.

**Revendications**

1. Procédé permettant de fabriquer une feuille de matière plastique dont l'une des surfaces combine les caractéristiques de brillance élevée et de coefficient de frottement faible, dans lequel on extrude une matière thermoplastique pour former une couche thermoplastique chauffée et l'on presse ladite couche, alors qu'elle se trouve encore dans un état ramolli, à l'aide d'un cylindre refroidisseur qui est maintenu à une température à laquelle il refroidira et durcira la surface de la couche qui se trouve en contact avec lui, ce cylindre refroidisseur possédant une surface grenaillée, à la grenaille angulaire, et polie qui présente des creux minuscules, de forme irrégulière, répartis sur toute la surface, ces creux possédant une profondeur de 1 à 30 microns, une profondeur moyenne de 12 microns, avec un écart-type - pour la profondeur - de 6,25 microns, et une densité sur la surface du cylindre supérieure à 3 000 par centimètre carré, caractérisé en ce que la surface grenaillée, à la grenaille angulaire, et polie a été usée, par un polissage supplémentaire, à un degré tel que les creux de forme irrégulière répartis au hasard possèdent désormais, sur ladite surface, des pourtours sensiblement convexes et arrondis et que leur profondeur moyenne se trouve réduite à environ 5 microns, avec un écart-type - pour la profondeur - inférieur à 3 microns, la densité moyenne des creux sur la surface du cylindre étant d'approximativement 3 000 par centimètre carré et l'aire moyenne de chaque creux étant inférieure à 16 000 microns carrés.

2. Procédé selon la revendication 1, caractérisé en outre par les étapes supplémentaires consistant à former une couche de base constituée d'au moins un matériau choisi, à mettre en contact avec cette couche de base celle des surfaces de la couche thermoplastique qui est opposée à celle se trouvant en contact avec le cylindre refroidisseur et à appliquer une pression à l'ensemble des couches pour former un stratifié.

3. Procédé selon la revendication 2, caractérisé par ailleurs en ce que l'on met en forme le stratifié (21), entre un mandrin de formage (23) et une matrice de formage (24), en déplaçant le stratifié longitudinalement et en le pliant en une forme tubulaire autour du mandrin - ladite couche thermoplastique (13) se trouvant à l'extérieur de la forme tubulaire, en contact glissant avec la matrice, et les bords longitudinaux du stratifié se chevauchant - et en ce que l'on thermosoude entre eux les bords longitudinaux du stratifié qui se chevauchent, afin de former un tube souple fermé, à soudure longitudinale.

4. Procédé permettant de fabriquer une feuille de matière plastique dont l'une des surfaces combine les caractéristiques de brillance élevée et de coefficient de frottement faible, dans lequel on extrude une matière thermoplastique pour former une couche thermoplastique chauffée et l'on presse ladite couche, alors qu'elle se trouve encore dans un état ramolli, à l'aide d'un cylindre refroidisseur qui est maintenu à une température à laquelle il refroidira et durcira la surface de la couche qui se trouve en contact avec lui, ce cylindre refroidisseur possédant une surface grenaillée, à la grenaille angulaire, et polie qui présente des creux minuscules, de forme irrégulière, répartis sur toute la surface, caractérisé en ce que, pour produire sur la feuille de matière plastique des saillies présentant des formes irrégulières avec des pourtours sensiblement convexes et arrondis, les creux possèdent, sur la surface du cylindre, des pourtours eux-mêmes sensiblement convexes et arrondis et leur profondeur moyenne est d'environ 5 microns, avec un écart-type - pour la profondeur - inférieur à 3 microns, la densité moyenne des creux sur la surface du cylindre étant d'approximativement 3 000 par centimètre carré et l'aire moyenne de chaque creux étant inférieure à 16 000 microns carrés.

5. Cylindre refroidisseur, destiné à être utilisé pour mettre en pratique le procédé conforme à l'une quelconque des revendications 1 à 4, que l'on grenaille à la grenaille angulaire, pour former à sa surface des creux de forme irrégulière répartis au hasard, puis que l'on chrome, la surface du cylindre possédant des creux dont la profondeur varie de 1 à 30 microns, dont la profondeur moyenne est de 12 microns avec un écart-type - pour la profondeur - de 6,25 microns et dont la densité sur la surface du cylindre est supérieure à 3 000 par centimètre carré, caractérisé en ce que l'on polit la surface chromée à un degré tel que les pourtours, sur ladite surface, des creux de forme irrégulière sont rendus sensiblement convexes et arrondis et que leur profondeur moyenne se trouve réduite à environ 5 microns, avec un écart-type - pour la profondeur - inférieur à 3 microns, la densité moyenne des creux sur la surface du cylindre étant d'approximativement 3 000 par centimètre carré et l'aire moyenne de chaque creux étant inférieure à 16 000 microns carrés.

6. Feuille de matière plastique dont l'une des surfaces possède une brillance élevée et un coefficient de frottement faible, cette surface étant constituée d'une couche de matière thermoplastique présentant une surface lisse interrompue par des saillies réparties au hasard, caractérisée en ce que les saillies possèdent une hauteur moyenne d'environ 5 microns avec un écart-type - pour la hauteur des saillies, autour de la moyenne - inférieur à 3 microns, une densité moyenne sur la surface de la feuille d'approximativement 3 000 par centimètre carré et une aire moyenne - pour chaque saillie - inférieure à 16 000 microns carrés, les saillies possédant des formes irrégulières avec - sur ladite surface - des pourtours sensiblement convexes et arrondis, comme on peut en obtenir en appliquant à la couche thermoplastique le procédé conforme à l'une quelconque des revendications 1 à 4.

7. Feuille de matière plastique selon la revendication 6, caractérisée en ce que la matière thermoplastique est du polyéthylène et en ce que la surface de la feuille possède un coefficient de frottement, mesuré face contre face, de 1,0 ou moins et une brillance, pour un angle TAPPI de 20 °, de 60 à 70 unités.

8. Feuille de matière plastique selon la revendication 6 ou la revendication 7, caractérisée en ce que la surface de matière thermoplastique constitue la surface de revêtement extérieure d'un substrat imprimé et/ou décoré, la surface de matière thermoplastique étant transparente.

9. Récipient possédant une couche - située le plus à l'extérieur ou voisine de la couche située le plus à l'extérieur - constituée d'une matière thermoplastique présentant une surface lisse interrompue par des saillies réparties au hasard, caractérisé en ce que les saillies possèdent une hauteur moyenne d'environ 5 microns avec un écart-type - pour la hauteur des saillies, autour de la moyenne - inférieur à 3 microns, une densité moyenne sur la surface de la feuille d'approximativement 3 000 par centimètre carré et une aire moyenne - pour chaque saillie - inférieure à 16 000 microns carrés, les saillies possédant des formes irrégulières avec - sur ladite surface - des pourtours sensiblement convexes et arrondis, comme on peut en obtenir en appliquant à la couche thermoplastique le procédé conforme à l'une quelconque des revendications 1 à 4.

10. Récipient selon la revendication 9, dans lequel la matière plastique est du polyéthylène et dans lequel la surface de celle-ci possède un coefficient de frottement, mesuré face contre face, de 1,0 ou moins et une brillance, pour un angle TAPPI de 20 °, de 60 à 70 unités.

11. Récipient selon la revendication 9 ou la revendication 10, qui est de forme tubulaire et dans lequel ladite couche constitue un revêtement transparent sur un substrat imprimé et/ou décoré.

FIG. 1

FIG. 2

FIG. 3
(Prior Art)

FIG. 4
(Prior Art)

FIG. 5
(Prior Art)

FIG. 6

FIG. 7

FIG. 8